# EUROPEAN PATENT APPLICATION

(11) **EP 2 105 238 A1**
(43) Date of publication of application: **30.09.2009**
(21) Application number: 08703306.4
(22) Date of filing: 16.01.2008
(51) Int. Cl.: B23K 26/00, A61C 19/04, B23K 26/06, B23K 101/42, G01N 21/64

(54) **LASER PROCESSING DEVICE AND ITS PROCESSING METHOD**

(30) Priority: 17.01.2007 JP 2007008402
(71) Applicant: Sumitomo Electric Industries, Ltd., Osaka-shi, Osaka 541-0041 (JP)
(72) Inventor: YAMADA, Eiichiro, Yokohama-shi Kanagawa 244-8588 (JP); INOUE, Akira, Yokohama-shi Kanagawa 244-8588 (JP); HATAYAMA, Hitoshi, Yokohama-shi Kanagawa 244-8588 (JP)
(74) Representative: HOFFMANN EITLE
(86) International application number: PCT/JP2008/050445
(87) International publication number: WO 2008/087984

(57) **Abstract**

A laser processing apparatus 1 includes: a processing light source 2 for emitting a processing light for processing a tooth 13A or a gingiva 13B; a halogen lamp 3 for emitting an illumination light for illuminating the tooth 13A or the gingiva 13B; a detector 4 capable of detecting a multiple-wavelength light from the tooth 13A or the gingiva 138; and a controller 5 for controlling the light-emitting state of the first light-emitting part 2. The detector 4 has a first detection element 6 and a second detection element 7 with light-receiving sensitivities that differ in accordance with wavelength, detects light intensities of different wavelengths, and outputs the detection result to the controller 5. The controller 5 controls the light-emitting state of the processing light source 2 on the basis of the ratio of the respective intensities of the different wavelength light detected by the detector 4.

## Description

### Technical Field

The present invention relates to a laser processing apparatus and a processing method for same.

### Background Art

The technology described in Patent Document 1, for example, is prior-art technology in this field. The laser processing apparatus described in this document comprises a laser light source that emits a joining light; a laser light source that emits a determination light; and a determination device for determining if a joining state is good or bad. Then, after irradiating the joining light onto a joining part of an object to be processed, the determination light is irradiated onto the joining part, and a determination as to whether the joining state is good or bad is made in accordance with receiving reflected light and radiant light therefrom in the determination device.
[Patent Document 1] Japanese Patent Application Laid-open No. 5-335735

### Disclosure of the Invention

### Problem to be Solved by the Invention

However, the prior-art laser processing apparatus mentioned above irradiates a determination light onto the joining part, detects via radiant light changes in temperature occurring in the joining part as a result of this irradiation, and makes a determination as to whether the processing status of the object to be processed is good or bad on the basis of the detected result. As a result, the problem is that processing takes time, and improvements for making processing faster are impeded.

An object of the present invention is to provide a laser processing apparatus and processing method for same that make highspeed processing possible.

### Means for Solving the Problem

A laser processing apparatus related to the present invention comprises a first light-emitting part for emitting a processing light for processing an object to be processed; a first light-guiding body for guiding the processing light emitted from the first light-emitting part to the object to be processed; a second light-guiding body for guiding a multiple-wavelength light generated by the object to be processed; a detector for detecting the multiple-wavelength light from the object to be processed being guided by the second light-guiding body; and a controller for controlling the light-emitting state of the first light-emitting part on the basis of a result detected by the detector.

In the laser processing apparatus related to the present invention, the processing light emitted from the first light-emitting part is guided by the first light-guiding body, and is irradiated onto the object to be processed. Then, the multiple-wavelength light generated by the object to be processed is guided to the detector by the second light-guiding body, and is detected by the detector. The controller specifies the processing status of the object to be processed on the basis of this detection result, and controls the light-emitting state of the first light-emitting part. Directly detecting the multiple-wavelength light and specifying the processing status like this makes it possible to greatly enhance processing speed and speed up processing more than in a case where the processing status is specified by changes in the temperature of the object to be processed. Also, detecting the multiple- wavelength light from the object to be processed and controlling the light-emitting state of the first light-emitting part based on the detection results makes it possible to adjust irradiation conditions in accordance with the processing status as needed, enabling heightened processing accuracy.

In the laser processing apparatus related to the present invention, it is preferable that the detector detect respective optical intensities of light of different wavelengths, and that the controller control the light-emitting state of the first light-emitting part on the basis of the ratio of the respective light intensities of the light of different wavelengths detected by the detector. In this case, specifying the processing status in accordance with the ratio of the intensities of the different wavelengths of light that have been detected makes it possible to enhance processing accuracy.

In the laser processing apparatus related to the present invention, it is preferable that the detector comprise a plurality of detection elements with light-receiving sensitivities that differ by wavelength. Providing detection elements capable of supporting different wavelengths like this makes it possible to enhance detection accuracy and heighten reliability in specifying the processing status.

In the laser processing apparatus related to the present invention, it is preferable that the detector comprise an optical filter for either transmitting or reflecting light of respectively different center wavelengths; and a plurality of detection elements for detecting the optical intensities of the different center wavelength light that has either passed through the optical filter or been reflected by the optical filter. This makes it possible to simplify the configuration of the detector and to reduce the overall cost of the apparatus.

In the laser processing apparatus related to the present invention, it is preferable that the detector comprise one detection element; and optical path changing means for changing the optical path in accordance with wavelength and switching the optical path to the detection element. This makes it possible to simplify the configuration of the detector, and to reduce the overall cost of the apparatus.

In the laser processing apparatus related to the present invention, it is preferable that the first light-emitting part comprise a plurality of light sources having different center wavelengths. A plurality of processing lights having different center wavelengths is obtained in accordance with this, making it possible to suitably select a processing light in accordance with the processing status of the object to be processed and enabling processing accuracy to be heightened even further.

It is preferable that the laser processing apparatus related to the present invention further comprise a second light-emitting part for emitting an observation light for observing the object to be processed; and a third light-guiding body for guiding the observation light emitted from the second light-emitting part to the object to be processed. In this case, using both a processing light and an observation light makes it possible to further enhance processing accuracy.

In the laser processing apparatus related to the present invention, it is preferable that the second light-emitting part comprise a plurality of light sources having different center wavelengths. A plurality of observation lights having different center wavelengths is obtained in accordance with this, making it possible to suitably select an observation light in accordance with the processing status of the object to be processed and enabling processing accuracy to be heightened even further.

In the laser processing apparatus related to the present invention, it is preferable that at least the first light-guiding body and the third light-guiding body be bundled together and affixed on a side of the object to be processed. In this case, bundling the light-guiding bodies together enables the apparatus to be made more compact and to be operated more easily.

A laser processing method related to the present invention comprises a first step for irradiating at least one of a processing light and an observation light onto an object to be processed; a second step for detecting detection light, which is multiple-wavelength light from the object to be processed, and specifying an irradiation target area in accordance with the characteristics of the detected detection light; and a third step for irradiating the processing light onto the specified irradiation target area and processing the object to be processed.

Processing the irradiation target area after detecting the detection light, which is the multiple-wavelength light from the object to be processed, and specifying the irradiation target area on the basis of the detection result like this makes it possible to enhance processing speed for the object to be processed and to suitably adjust the irradiation conditions in accordance with the processing status of the object to be processed, enabling processing accuracy to be heightened.

In the third step of the laser processing method related to the present invention, it is preferable that the optical intensity of the processing light during irradiation be higher than the optical intensity of the processing light during irradiation in the first step. In this case, using a processing light with a weaker optical intensity than the processing light in the third step to specify the irradiation target area makes it possible to reduce damage caused to the object to be processed when specifying the irradiation target area.

A laser processing method related to the present invention comprises a first step for irradiating light of at least one of a processing light and an observation light onto an object to be processed; a second step for detecting detection light, which is multiple-wavelength light from the object to be processed, and determining either a temperature change or a status change in the object to be processed in accordance with the characteristics of the detected detection light; and a third step for controlling the processing light irradiated onto the object to be processed on the basis of the determination result.

Detecting the detection light, which is multiple-wavelength light from the object to be processed, determining either a temperature change or a status change in the object to be processed, and controlling the processing light irradiated onto the object to be processed on the basis of the determination result like this makes it possible to enhance the processing speed of the object to be processed and to suitably adjust the irradiation conditions in accordance with the processing status of the object to be processed, enabling heightened processing accuracy.

In the second step of the laser processing method related to the present invention, it is preferable that a determination be made as to the extent of a status change based on a change in the spectrum of the detection light, and in a case where there is a change in the spectrum of the detection light, that control be exercised over the light-emitting state of the first light-emitting part so as either to reduce the power of the processing light irradiated onto the object to be processed in the third step, or to stop the irradiation of the processing light. In so doing, it is possible to confirm the processing status of the object to be processed based on the change in the spectrum of the detection light and to suitably adjust the power of the processing light in accordance with the processing status, enabling heightened processing accuracy.

In the laser processing method related to the present invention, it is preferable that the observation light irradiation area of the object to be processed be wider that the processing light irradiation area. This makes it possible to extensively observe the object to be processed, making it easier to ascertain the processing status of the object to be processed and to speed up processing.

In the laser processing method related to the present invention, it is preferable that a fourth light-guiding body, which is optically connected to both the first light-guiding body and the third light-guiding body, be disposed at the output ends of the first light-guiding body and the third light-guiding body, and that the spread angle of the observation light outputted from the fourth light-guiding body be larger than the spread angle of the processing light outputted from the fourth light-guiding body. This enables the irradiation area of the observation light to be made larger than the irradiation area of the processing light outputted from the fourth light-guiding body, making extensive observation of the object to be processed possible. As a result of this, it becomes possible to readily confirm the processing status of the object to be processed and to speed up processing.

In the laser processing method related to the present invention, it is preferable that the first light-guiding body be surrounded by the third light-guiding body. This positions the third light-guiding body on the outer side of the first light-guiding body making it possible for the irradiation area of the observation light outputted from the third light-guiding body to be wider than the irradiation area of the processing light outputted from the first light-guiding body, enabling extensive observation of the object to be processed. As a result of this, it becomes possible to readily confirm the processing status of the object to be processed and to speed up processing.

In the laser processing method related to the present invention, it is preferable that the detection area of the detection light from the object to be processed be wider than the irradiation area of the processing light on the object to be processed. This enables the detection light from the object to be processed to be extensively detected, making it possible to readily confirm the processing status of the object to be processed and to speed up processing.

In the laser processing method related to the present invention, it is preferable that a fifth light-guiding body, which is optically connected to both the first light-guiding body and the second light-guiding body, be disposed on the output side of the first light-guiding body, and that the maximum angle of the detection light entering the fifth light-guiding body with respect to the optical axis of the fifth light-guiding body be larger than the spread angle of the processing light outputted from the fifth light-guiding body. This enables the detection area of the detection light entering the fifth light-guiding body to be made wider than the irradiation area of the processing light outputted from the fifth light-guiding body, making extensive detection of the detection light from the object to be processed possible. As a result of this, it becomes possible to readily confirm the processing status of the object to be processed and to speed up processing.

In the laser processing method related to the present invention, it is preferable that the first light-guiding body be surrounded by the second light-guiding body. This positions the second light-guiding body on the outer side of the first light-guiding body, making it possible for the detection area of the detection light entering the second light-guiding body to be wider than the irradiation area of the processing light outputted from the first light-guiding body, enabling extensive detection of the detection light from the object to be processed. Accordingly, it becomes possible to readily confirm the processing status of the object to be processed and to speed up processing.

### Effect of the Invention

According to the present invention, it is possible to provide a laser processing apparatus and a processing method for same that makes highspeed processing possible.

### Brief Description of the Drawings

Fig. 1 is a simplified diagram showing the configuration of a laser processing apparatus related to a first embodiment;
Fig. 2 is a diagram showing the reflectance/scattering spectra of hard tissue and tuna flesh;
Fig. 3 is a simplified diagram showing a variation of the laser processing apparatus related to the first embodiment;
Fig. 4 is a simplified diagram showing a variation of the laser processing apparatus related to the first embodiment;
Fig. 5 is a simplified diagram showing the configuration of a laser processing apparatus related to a second embodiment;
Fig. 6 is a simplified diagram showing a variation of the laser processing apparatus related to the second embodiment;
Fig. 7 is a simplified diagram showing a variation of the laser processing apparatus related to the second embodiment;
Fig. 8 is a flowchart showing the processing method of a laser processing apparatus related to a third embodiment;
Fig. 9 is a simplified diagram showing the configuration of a laser processing apparatus related to a fourth embodiment;
Fig. 10 is a cross-sectional view showing a bundled fibre;
Fig. 11 is a simplified diagram showing the configuration of a laser processing apparatus related to a fifth embodiment;
Fig. 12 is a cross-sectional view showing a bundled fibre;
Fig. 13 is a simplified diagram showing the configuration of a laser processing apparatus related to a sixth embodiment; and
Fig. 14 is diagram showing a method for widening the irradiation area of the observation light by using the chromatic aberration of a condenser lens.

### Explanation of Reference Numerals

1, 14, 20, 25, 34,39, 47, 57, 67 laser processing apparatus
2, 35, 45 processing light source (first light-emitting part)
4, 15, 21 detector
5 controller
6, 7, 16, 17, 22, 28 detection element
8, 31, 32, 36, 46, 48, 58, 68 optical fibre (first light-guiding body)
10, 11, 24, 33, 53, 60, 73 optical fibre (second light-guiding body)
12 bundled fibre
13A tooth (object to be processed)
13B gingiva (object to be processed)
18, 19 optical filter
23 prism (optical path changing means)
26 electronic part (object to be processed)
27 processing light-emitting part (first light-emitting part)
37 observation light source (second light-emitting part)
38, 42, 44, 50, 63, 70 optical fibre (third light-guiding body)
40 observation light source (second light-emitting part)
55, 75, 78 optical fibre (fourth light-guiding body)
65 optical fibre (fifth light-guiding body)

### Best Mode for Carrying Out the Invention

The best modes for carrying out the invention will be explained in detail below by referring to the attached drawings. Furthermore, to avoid redundancy, the same reference numerals have been assigned to identical elements in the explanations of the drawings.

### (First Embodiment)

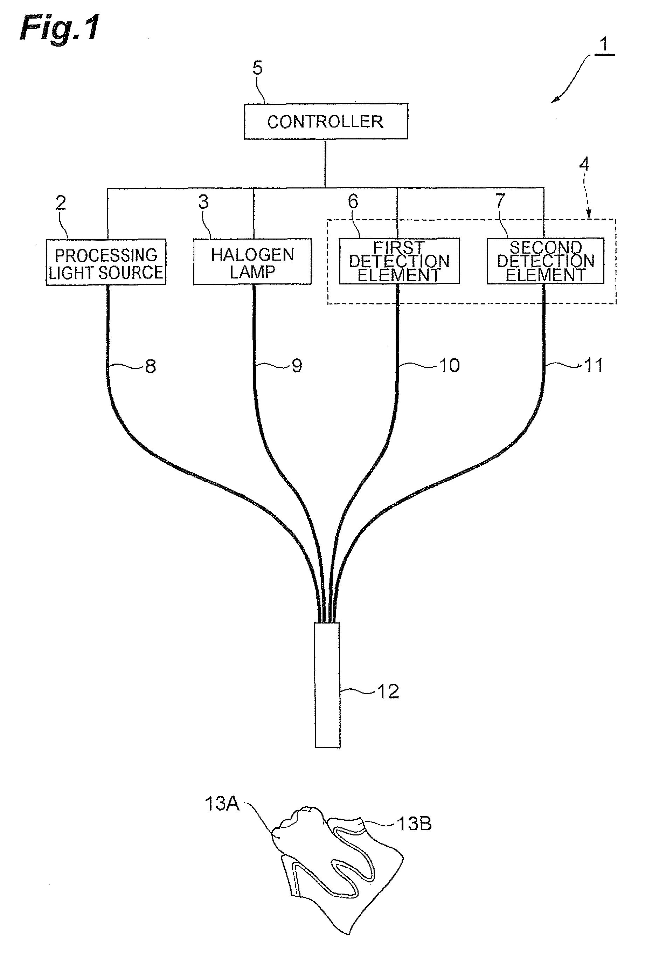

Fig. 1 is a simplified diagram showing the configuration of a laser processing apparatus related to a first embodiment. The laser processing apparatus 1 is used in dental treatment, and comprises a processing light source (first light-emitting part) 2 for emitting a processing light for processing a tooth 13A or a gingiva 13B (object to be processed); a halogen lamp 3 for emitting a white light, which is the observation light (illumination light) for observing the tooth 13A, the gingiva 13B or both; a detector 4 that is able to detect detection light, which is multiple-wavelength light from the tooth 13A and the gingiva 13B; and a controller 5 for controlling the light-emitting state of the processing light source 2.

The processing light source 2 comprises a semiconductor laser element for outputting a fixed wavelength 408-nm laser light. The processing light emitted from this processing light source 2 is guided to the tooth 13A or the gingiva 13B by an optical fibre (first light-guiding body) 8, which is optically connected to the processing light source 2.

The detector 4 comprises a first detection element 6 and a second detection element 7, the light-receiving sensitivities of which differ by wavelength. The first detection element 6 has high light-receiving sensitivity for light with a wavelength of 540 nm, and the second detection element 7 has high light-receiving sensitivity for light with a wavelength of 610 nm. The first detection element 6 and the second detection element 7 are each optically connected to optical fibres (second light-guiding bodies) 10, 11, detect the optical intensities of the different wavelengths guided in accordance with the optical fibres 10, 11, and output the detected results to the controller 5. The controller 5 controls the light-emitting state of the processing light source 2 on the basis of the results detected by the detector 4. The illumination light from the halogen lamp 3 is guided to the tooth 13A, the gingiva 13B or both in accordance with an optical fibre 9 that is optically connected to the halogen lamp 3.

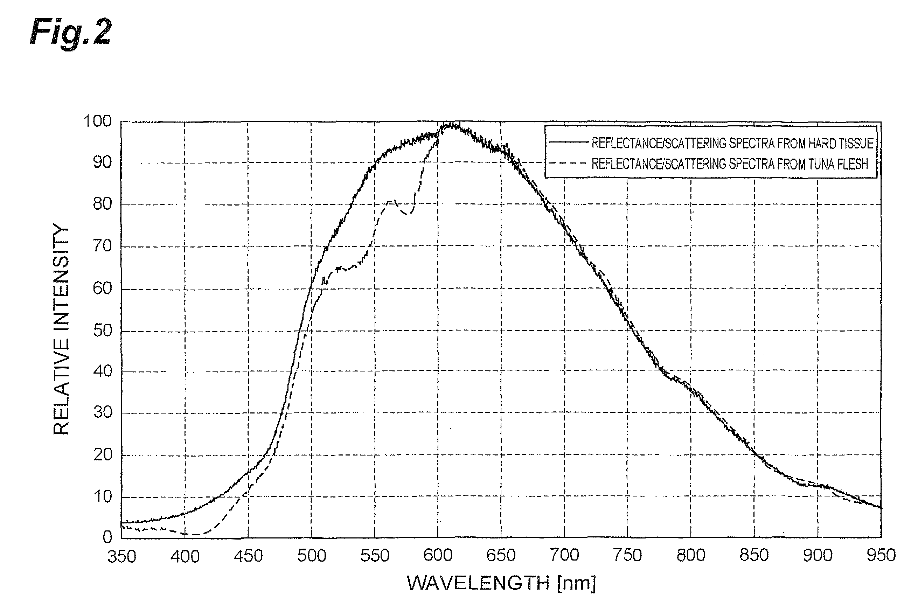

The tooth 13A has hard tissue (enamel, dentin), and the gingiva 13B has soft tissue (gums). Fig. 2 is a diagram showing the reflectance/scattering spectra of hard tissue and tuna flesh. Tuna flesh is used instead of the gingiva 13B because it has substantially the same structure as the gingiva, which is soft tissue. As shown in Fig. 2, the reflectance/scattering spectra of hard tissue and soft tissue have the highest peaks in the vicinity of the 610-nm wavelength. The difference between the reflectance/scattering spectra for the two is the greatest in the vicinity of the 540-nm wavelength.

Therefore, in a case where the reflectance/scattering spectra at the 610-nm wavelength is 100, the relative intensity of the reflectance/scattering spectra of hard tissue at the 540-nm wavelength is approximately 85, and the relative intensity of the reflectance/scattering spectra of soft tissue at the 540-nm wavelength is approximately 68. Then, in a case where the determination threshold of the hard tissue (tooth 13A) is 85 and the determination threshold of the soft tissue (gingiva 13B) is 68, it is possible to calculate the ratio of the optical intensity of the 540-nm wavelength and the optical intensity of the 610-nm wavelength detected by the detector 4, and to easily determine which of the tooth 13A or the gingiva 13B is the irradiation target area by comparing the calculated value against the determination threshold.

The optical fibres 8, 9, 10, 11 are bundled together and affixed on the tooth 13A side. These optical fibres 8, 9, 10, 11 configure a bundled fibre 12. Bundling the optical fibres 8, 9, 10, 11 together like this enables the laser processing apparatus 1 to be made smaller, and also facilitates the operation of the apparatus. A condenser lens (not shown in the drawing) is installed at the tip of the bundled fibre 12 so as to be able to move along the axial direction of the bundled fibre 12.

In a laser processing apparatus 1 configured like this, the processing light emitted from the processing light source 2 is guided in accordance with an optical fibre 8 and is irradiated on the tooth 13A or the gingiva 13B, the illumination light emitted from a halogen lamp 3 is guided in accordance with an optical fibre 9 and irradiated on the tooth 13A, the gingiva 13B or both. Consequently, multiple-wavelength light (that is, the detection light), which comprises fluorescence generated by the tooth 13A and the gingiva 13B, reflected illumination light and processing light, scattered illumination light and processing light, and radiant light is guided to the detector 4 in accordance with the optical fibres 10, 11, and is detected by the first detection element 6 and the second detection element 7. The controller 5 specifies the processing status of the tooth 13A or the gingiva 13B on the basis of the detection results, and controls the light-emitting state of the processing light source 2. Directly detecting multiple-wavelength light and specifying the processing status like this makes it possible to greatly enhance processing speed and speed up processing compared to a case where the processing status is specified in accordance with a temperature change as in the past.

Also, detecting the multiple-wavelength light from the tooth 13A and the gingiva 13B and controlling the light-emitting state of the processing light source 2 on the basis of the detection results makes it possible to suitably adjust the irradiation conditions in accordance with the processing status of either the tooth 13A or the gingiva 13B, enabling processing accuracy to be heightened. In addition, since the detector 4 has a first detection element 6 and a second detection element 7 with light-receiving sensitivities that differ by wavelength, the effect is enhanced detection accuracy and heightened reliability in specifying the processing status.

Next, a laser processing (treatment) method that uses the laser processing apparatus 1 related to the first embodiment will be explained.

First, in a first step, illumination light is generated from the halogen lamp 3 in accordance with the controller 5, and irradiated on the tooth 13A, the gingiva 13B or both. The maximum irradiation duration at this time is 20 ms. At the time of irradiation, a condenser lens disposed at the tip of the bundled fibre 12 moves along the axial direction of the bundled fibre 12 so as to diffuse the illumination light, ensuring an extensive irradiation range.

Next, in a second step, detection light, which is multiple-wavelength light from the tooth 13A and the gingiva 13B, is detected, and the irradiation target area is specified in accordance with the characteristics of the detected detection light. The tooth 13A (hard tissue) and the gingiva 13B (soft tissue) both generate fluorescence and reflect illumination light in accordance with the irradiation of the illumination light. Then, multiple-wavelength light comprising this fluorescence, reflected and scattered illumination light and radiant light enters the optical fibres 10, 11 and is guided to the detector 4.

Since the detector 4 comprises a first detection element 6 having high light-receiving sensitivity to 540-nm wavelength light, and a second detection element 7 having high light-receiving sensitivity to 610-nm wavelength light, the 540-nm wavelength light and 610-nm wavelength light are detected from among the multiple-wavelength light from the tooth 13A or the gingiva 13B that has been guided by the optical fibres 10, 11. This detection result is inputted to the controller 5. The controller 5 calculates the ratio of the 540-nm wavelength light intensity and the 610-nm wavelength light intensity detected by the detector 4, and compares the calculated value against a determination threshold. Then, if the calculated value is in the vicinity of 0.68, the controller 5 determines that the irradiation target area is the gingiva 13B (soft tissue), and, conversely, if the calculated value is in the vicinity of 0.85, the controller 5 determines that the irradiation target area is the tooth 13A (hard tissue). Consequently, the irradiation target area is easily specified.

Next, in a third step, the processing light is irradiated onto the specified irradiation target area, and either the tooth 13A or the gingiva 13B is processed. For example, in a case where it has been determined that the irradiation target area is the gingiva 13B (soft tissue), the controller 5 controls the processing light source 2 such that light continues to be emitted from the processing light source 2. In a case where it has been determined that the irradiation target area is the tooth 13A (hard tissue), the controller 5 controls the processing light source 2 such that light stops being emitted from the processing light source 2.

In the third step, when the processing light is irradiated onto the irradiation target area, the condenser lens disposed at the tip of the bundled fibre 12 moves in the axial direction of the bundled fibre 12 and condenses the processing light onto the irradiation target area.

Processing the irradiation target area after detecting the characteristics of the multiple-wavelength light from the tooth 13A or the gingiva 13B and specifying the irradiation target area on the basis of the detection results like this makes it possible to prevent mistakenly processing a part that does not require processing, and to enhance the speed at which the tooth 13A or the gingiva 13B is processed. It also makes it possible to suitable adjust the irradiation conditions in accordance with the processing status of the tooth 13A or the gingiva 13B, enabling heightened processing accuracy.

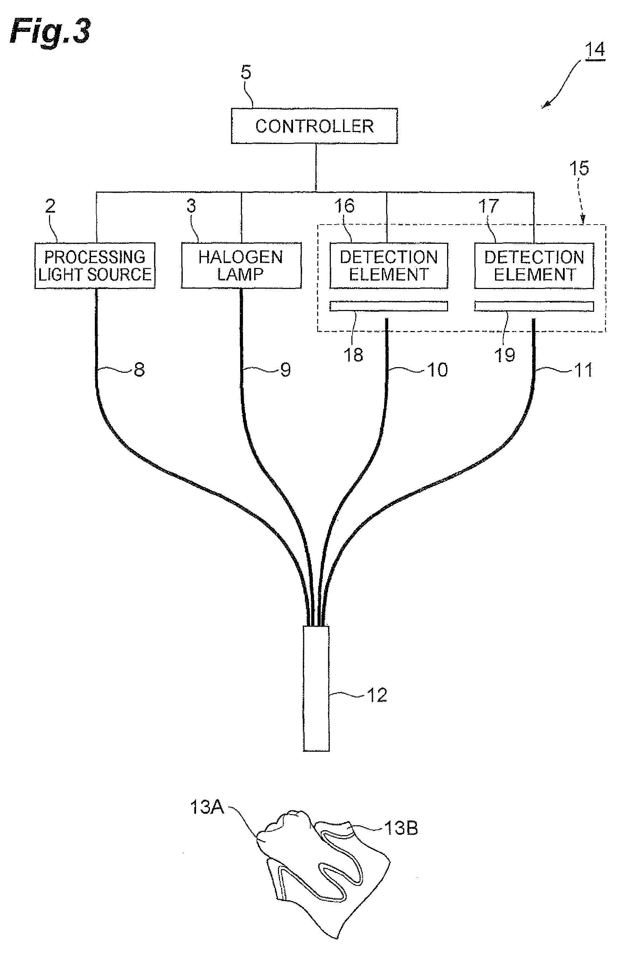

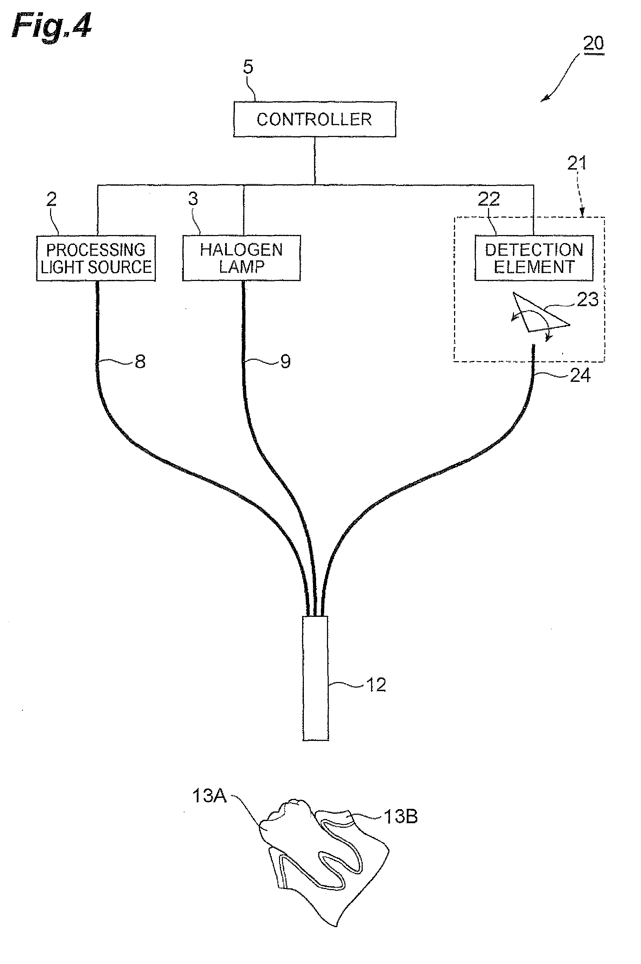

Variations of the laser processing apparatus 1 related to the first embodiment will be explained while referring to Figs. 3 and 4.

In the variation shown in Fig. 3, the detector 15 of the laser processing apparatus 14 is configured by combining optical filters 18, 19, which either transmit or reflect light having respectively different center wavelengths, on a one-to-one basis with detection elements 16, 17, that are able to detect multiple-wavelength light. Optical filter 18 has high transmittance with respect to 540-nm wavelength light, and low transmittance with respect to 610-nm wavelength light. By contrast, optical filter 19 has high transmittance with respect to 610-nm wavelength light, and low transmittance with respect to 540-nm wavelength light. Detection elements 16, 17 are able to detect multiple-wavelength light, such as wavelengths of 540 nm and 610 nm.

In accordance with this configuration, the multiple wavelength light, which comprises fluorescence, reflected illumination light, scattered illumination light, and radiant light from the tooth 13A or the gingiva 13B, is guided respectively to the optical filters 18, 19 by the optical fibres 10, 11. Then, the 540-nm wavelength light is transmitted through the optical filter 18, enters the detection element 16, and is detected by the detection element 16, and the 610-nm wavelength light is transmitted through the optical filter 19, enters the detection element 17 and is detected by the detection element 17. The laser processing apparatus 14 of this configuration achieves the same effect as the laser processing apparatus 1 related to the first embodiment, and, in addition, makes it possible to simplify the configuration of the detector 15 and to reduce the overall costs of the apparatus.

In the variation shown in Fig. 4, the detector 21 of the laser processing apparatus 20 comprises one detection element 22; and a prism (optical path changing means) 23 for changing the optical path in accordance with the wavelength. The prism 23 is optically connected to an optical fibre (second light-guiding body) 24 for guiding the multiple-wavelength light generated by the tooth 13A or the gingiva 13B. The detection element 22 is able to detect multiple-wavelength light, such as wavelengths of 540 nm and 610 nm.

In accordance with this configuration, the multiple-wavelength light, which comprises fluorescence, reflected illumination light, scattered illumination light, and radiant light from the tooth 13A or the gingiva 13B, is guided to the prism 23 by an optical fibre 24. The prism 23 changes the optical paths of the 540-nm and 610-nm wavelengths of the multiple-wavelength light, and switches the optical paths to the detection element 22 in accordance with the rotation of the prism 23. Therefore, the 540-nm wavelength light and the 610-nm wavelength light are respectively detected by the detection element 22. The laser processing apparatus 20 of this configuration achieves the same effect as the laser processing apparatus 1 related to the first embodiment, and, in addition, makes it possible to simplify the configuration of the detector 21 and to reduce the overall cost of the apparatus.

### (Second Embodiment)

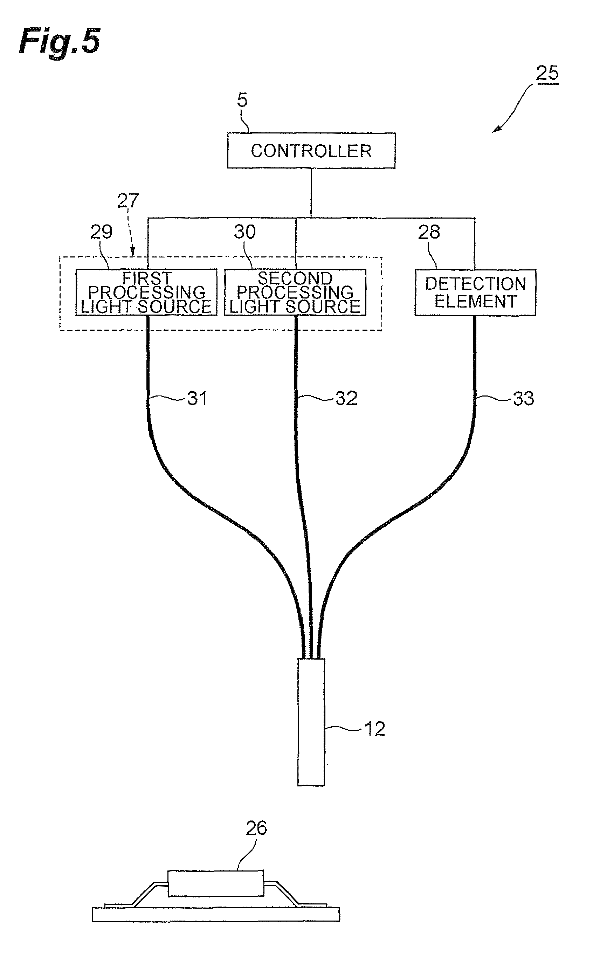

Next, a laser processing apparatus 25 related to a second embodiment will be explained. Fig. 5 is a simplified diagram showing the configuration of the laser processing apparatus related to the second embodiment. The laser processing apparatus 25 is used in the processing of an electronic part, and comprises a light-emitting part for processing (first light-emitting part) 27, which emits a processing light for processing an electronic part (object to be processed) 26; a detection element (detector) 28 that is able to detect a detection light, which is a multiple-wavelength light from the electronic part 26; and the controller 5 for controlling the light-emitting state of the processing light-emitting part 27.

The processing light-emitting part 27 has two light sources with different center wavelengths, and comprises a first processing light source 29, which outputs a 408-nm wavelength laser beam; and a second processing light source 30, which outputs a 910-nm wavelength laser beam. The processing light emitted from these processing light sources 29, 30 is guided to the electronic part 26 by optical fibres (first light-guiding bodies) 31, 32, which are optically connected to the respective processing light sources 29, 30.

The detection element 28 has an element that is able to detect multiple-wavelength light, such as wavelengths of 408 nm and 910 nm, and is optically connected to an optical fibre (second light-guiding body) 33. The detection element 28 detects the optical intensities of different wavelengths guided in accordance with the optical fibre 33, and outputs the detection results to the controller 5.

The controller 5 controls the light-emitting state of the processing light-emitting part 27 on the basis of the results detected by the detection element 28. That is, the controller 5 specifies the irradiation target area of the electronic part 26 by calculating the ratio of the optical intensity of the 408-nm wavelength light and the optical intensity of the 910-nm wavelength light detected by the detection element 28, and comparing the calculated value against a determination threshold.

The optical fibres 31, 32, 33 are bundled together and affixed on the electronic part 26 side. These optical fibres 31, 32, 33 configure a bundled fibre 12. Bundling the optical fibres 31, 32, 33 together like this enables the laser processing apparatus 25 to be made more compact, and also enables the apparatus to be operated more easily. A condenser lens (not shown in the drawing) is installed at the tip of the bundled fibre 12 so as to be able to move along the axial direction of the bundled fibre 12.

In the laser processing apparatus 25 configured like this, the processing light emitted from the first processing light source 29 and the second processing light source 30 is respectively guided by the optical fibres 31, 32 and is irradiated onto the electronic part 26. Then, the multiple-wavelength light generated by the electronic part 26 in accordance with this irradiation is guided to the detection element 28 by the optical fibre 33, and detected by the detection element 28. The controller 5 specifies the irradiation target area of the electronic part 26 on the basis of the detection results, and controls the light-emitting state of the processing light-emitting part 27. Directly detecting multiple-wavelength light and specifying the processing status like this makes it possible to greatly enhance processing speed and speed up processing compared to a case where the processing status is determined to be good or bad in accordance with a temperature change as in the past.

Also, detecting the multiple-wavelength light from the electronic part 26 and controlling the light-emitting state of the first processing light source 29 and the second processing light source 30 on the basis of the detection results makes it possible to suitably adjust the irradiation conditions in accordance with the processing status of the electronic part 26, enabling heightened processing accuracy. In addition, since the processing light-emitting part 27 has two light sources with different center wavelengths, it is possible to suitably select between two types of processing light with different center wavelengths in accordance with the processing status of the electronic part 26, enabling even higher processing accuracy.

Next, a laser processing method that uses the laser processing apparatus 25 related to the second embodiment will be explained.

First, in a first step, the respective processing light is generated from the first processing light source 29 and the second processing light source 30 in accordance with the controller 5, and irradiated onto the electronic part 26. The intensity of the processing light is weakened at this time so as not to damage the electronic part 26, and the maximum irradiation time is 20 ms. At the time of electronic part 26 irradiation, a condenser lens disposed at the tip of the bundled fibre 12 moves along the axial direction of the bundled fibre 12 so as to diffuse the processing light generated from the first processing light source 29 and the second processing light source 30, ensuring an extensive irradiation range.

Next, in a second and third steps, the multiple-wavelength light from the electronic part 26 is detected, the irradiation target is determined in accordance with the characteristics of the detection light, and the electronic part 26 is processed. Specifically, the gold, tin, and other such metal materials comprising the electronic part 26 and the glass-epoxy substrate on which the electronic part 26 is mounted respectively reflect the processing light and/or generate fluorescence. Then, the multiple-wavelength light (that is, the detection light) comprising the reflected processing light, fluorescence, scattered processing light and radiant light, enters the optical fibre 33 and is guided to the detection element 28.

The 408-nm and 910-nm wavelength light, which is the reflected processing light of the multiple-wavelength light generated by the electronic part 26, are detected by the detection element 28. These detection results are inputted to the controller 5. The controller 5 calculates the ratio of the optical intensity of the 408-nm wavelength light and the optical intensity of the 910-nm wavelength light detected by the detection element 28, and compares the calculated value against a determination threshold.

For example, in a case where α is the determination threshold for gold and β is the determination threshold for tin, if the calculated value is close to α, the irradiation target area of the electronic part 26 is determined to be the gold, the first processing light source 29 is made to operate and a light having a wavelength of 408 nm is irradiated. If the calculated value is close to β, the irradiation target area of the electronic part 26 is determined to be the tin, the first processing light source 29 and the second processing light source 30 are made to operate and light having a wavelength of 408 nm and light having a wavelength of 910 nm are irradiated. If the calculated value is a value other than these, the glass-epoxy substrate is determined to be the irradiation target area, and the emissions of light from the first processing light source 29 and the second processing light source 30 are stopped.

Detecting the characteristics of the detection light from the electronic part 26, determining the irradiation target on the basis of the detection result, and processing the electronic part 26 like this makes it possible to speed up the processing of the electronic part 26 and to heighten processing accuracy.

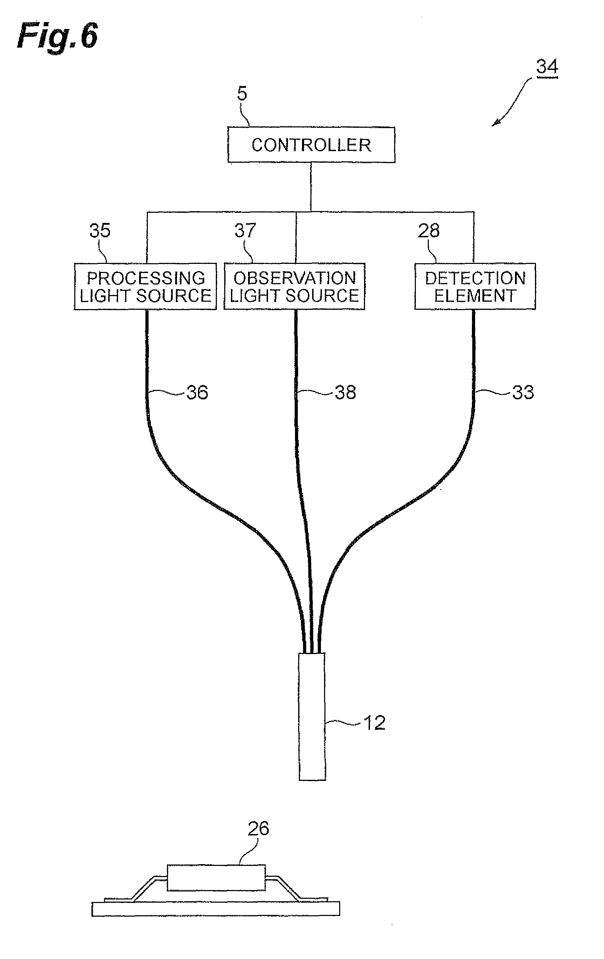

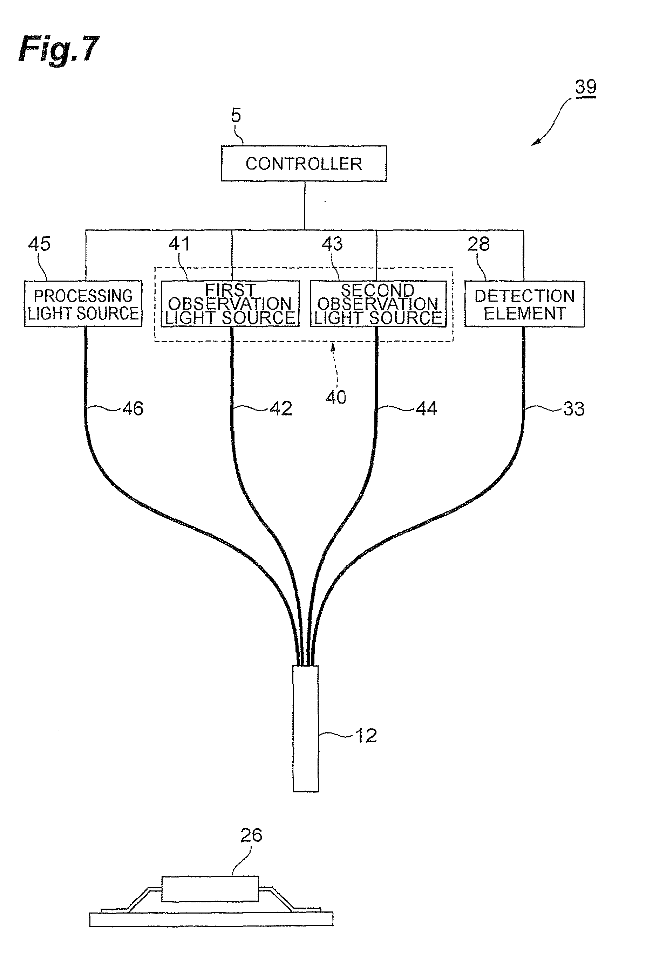

Variations of the laser processing apparatus 25 related to the second embodiment will be explained below while referring to Figs. 6 and 7.

In the variation shown in Fig. 6, the laser processing apparatus 34 further comprises an observation light source (second light-emitting part) 37, and the processing light-emitting part includes a processing light source (first light-emitting part) 35.

The processing light source 35 has a semiconductor laser device for outputting a laser beam with a fixed wavelength of 408 nm. The processing light emitted from the processing light source 35 is guided to the electronic part 26 by an optical fibre (first light-guiding body) 36, which is optically connected to the processing light source 35. The observation light source 37 emits an observation light for observing the electronic part 26, and comprises a semiconductor laser device for outputting a laser beam with a fixed wavelength of 660 nm. The observation light is guided to the electronic part 26 by an optical fibre (third light-guiding body) 38.

During laser processing using a laser processing apparatus 34 having a configuration like this, a processing light and an observation light are irradiated onto the electronic part 26, and a 408-nm wavelength light and a 660-nm wavelength light, which are the reflected light of the processing light and the observation light, are detected by the detection element 28. Then, the electronic part 26 is processed by determining the irradiation target area on the basis of the ratio of the optical intensities of the detected 408-nm wavelength light and 660-nm wavelength light, and irradiating the processing light.

In the variation shown in Fig. 7, a laser processing apparatus 39 comprises a processing light source (first light-emitting part) 45 and an observation light-emitting part (second light-emitting part) 40. The processing light source 45 has a semiconductor laser device for outputting a laser beam of a fixed wavelength of 308 nm. The processing light is guided to the electronic part 26 by an optical fibre (first light-guiding body) 46, which is optically connected to the processing light source 45.

The observation light-emitting part 40 emits observation light for observing the electronic part 26, and has two light sources with different center wavelengths; a first observation light source 41 for outputting a laser beam with a wavelength of 408 nm, and a second observation light source 43 for outputting a laser beam with a wavelength of 660 nm. The observation light emitted from these observation light sources 41, 43 are guided to the electronic part 26 by optical fibres (third light-guiding body) 42, 44, which are respectively optically connected to the two observation light sources 41, 43.

During laser processing using a laser processing apparatus 39 having a configuration like this, observation light emitted from the first observation light source 41 and the second observation light source 43 is irradiated onto the electronic part 26, and the 408-nm wavelength and 660-nm wavelength light, which is the reflected observation light, is detected by the detection element 28. Then, the electronic part 26 is processed by determining the irradiation target area on the basis of the ratio of the optical intensities of the detected 408-nm wavelength light and 660-nm wavelength light, and irradiating the 308-nm fixed-wavelength processing light.

### (Third Embodiment)

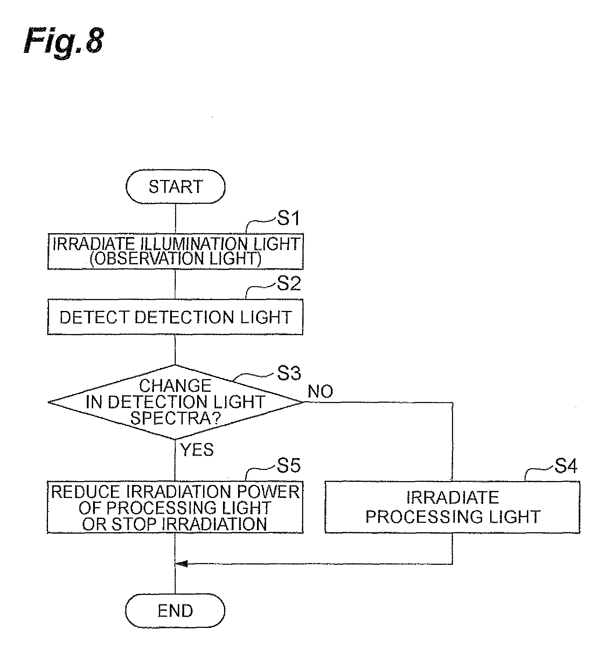

An incision of the gingiva 13B using the laser processing apparatus 1 will be explained below while referring to Fig. 8.

In Step S (first step), an illumination light is emitted from the halogen lamp 3 in accordance with the controller 5, and irradiated on the tooth 13A and the gingiva 13B. The maximum irradiation duration at this time is 20 ms.

In Step S2 (second step), detection light from the tooth 13A and the gingiva 13B is detected, and in Step S3 (second step), a determination is made as to a change in the processing status based on a change in the spectrum of the detected detection light. At this time, the irradiation of the illumination light causes both the tooth 13A and the gingiva 13B to fluoresce, and the illumination light is also reflected. The detection light, which comprises this fluorescence, reflected illumination light, scattered illumination light, and radiant light, enters the optical fibres 10, 11 and is guided to the detector 4.

Since the detector 4 comprises a first detection element 6, which has high light-receiving sensitivity to 540-nm wavelength light, and a second detection element 7, which has high light-receiving sensitivity to 610-nm wavelength light, the 540-nm wavelength and 610-nm wavelength light of the multiple-wavelength light from the tooth 13A and the gingiva 13B that has been guided by the optical fibres 10, 11 is detected. These detection results are inputted to the controller 5. The controller 5 determines the extent of the processing status change based on the changes in the spectrum of each of the detected 540-nm wavelength and 610-nm wavelength light.

Then, in a case where it has been determined that there is no change in the spectra of the 540-nm wavelength light and 610-nm wavelength light, processing proceeds to Step S4 (third step). In Step S4, the controller 5 maintains the light-emitting status of the processing light source 2, and an incision is made in the gingiva 138. By contrast, in a case where the determination is that there has been a change in the spectra of the 540-nm wavelength light and the 610-nm wavelength light, processing moves to Step S5 (third step). In Step S5, the controller 5 controls the light-emitting state of the processing light source 2 such that either the power of the processing light is reduced, or the irradiation of the processing light is stopped. For example, in a case where the determination is that there has been a spectrum change in the 540-nm wavelength and 610-nm wavelength light during the incision of the gingiva 13B, and the processing light is approaching the tooth 13A, the controller 5 controls the processing light source 2 such that the processing light emitted from the processing light source 2 becomes weaker. Further, in a case where the determination is that there has been a spectrum change in the 540-nm wavelength and 610-nm wavelength light and the processing light has hit the tooth 13A, the controller 5 controls the processing light source 2 so as to stop the emission of processing light from the processing light source 2. Then, for example, steps S1 through S5 are repeated the number of times necessary until the processing light hits the tooth 13A.

Constantly checking the state of the gingiva 13B incision on the basis of changes in the spectrum of the detection light and suitably adjusting the power of the processing light emitted from the processing light source 2 in accordance with the state of the incision like this makes it possible to reduce damage to the tooth 13A and to heighten processing accuracy.

### (Fourth Embodiment)

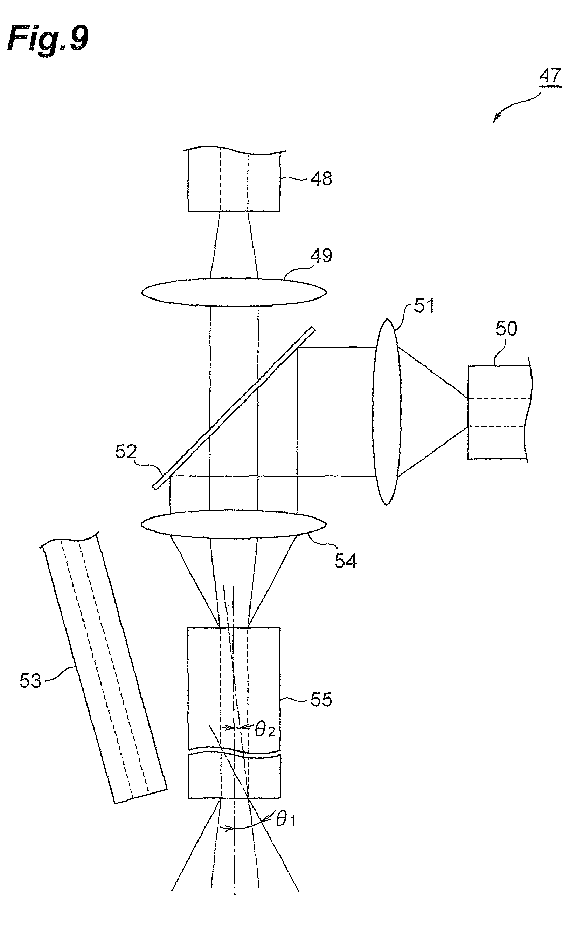

As shown in Fig. 9, a laser processing apparatus 47 comprises an optical fibre (first light-guiding body) 48 for guiding a processing light emitted from a processing light source to an object to be processed; an optical fibre (third light-guiding body) 50 for guiding an observation light emitted by an observation light source to the obj ect to be processed; an optical fibre (second light-guiding body) 53 for guiding a multiple-wavelength detection light generated by the object to be processed to a detector; and a controller for controlling the light-emitting states of the processing light source and the observation light source on the basis of the results detected by the detector. Since the processing light source, the observation light source and the controller related to this embodiment are the same as the processing light source 35, the observation light source 37 and the detector 4 in the variation shown in Fig. 6, and the detector is the same as the detector 21 in the variation shown in Fig. 4, redundant explanations have been omitted.

An optical fibre (fourth light-guiding body) 55, which is optically connected to an optical fibre 48 and an optical fibre 50, is disposed at the output ends of these optical fibres 48, 50. An optical fibre 53 for guiding the detection light from the object to be processed is installed in the vicinity of the optical fibre 55. The optical fibre 48 and the optical fibre 55 are interconnected via the condenser lenses 49, 54 and an optical filter 52, which is arranged between the condenser lenses 49, 54. By contrast, the optical fibre 50 and the optical fibre 55 are interconnected via the condenser lenses 51, 54 and the optical filter 52, which is arranged between the condenser lenses 51, 54.

The optical filter 52 transmits processing light guided by the optical fibre 48, and reflects observation light guided by the optical fibre 50. Therefore, the processing light outputted from the optical fibre 48 is condensed by the condenser lens 49, and after being transmitted through the optical filter 52, is condensed once again by the condenser lens 54, enters the optical fibre 55 and is outputted to the object to be processed from the optical fibre 55. Conversely, the observation light outputted from the optical fibre 50 is condensed by the condenser lens 51, and after being reflected by the optical filter 52, is condensed once again by the condenser lens 54, enters the optical fibre 55, and is outputted to the object to be processed from the optical fibre 55.

As shown in Fig. 9, the spread angle θ1 of the observation light outputted from the optical fibre 55 is larger than the spread angle θ2 of the processing light outputted from this optical fibre 55. This makes it possible to make the irradiation area of the observation light wider than the irradiation area of the processing light outputted from the optical fibre 55, enabling the object to be processed to be extensively observed. As a result of this, it is easy to confirm the processing status of the object to be processed, making it possible to speed up laser processing.

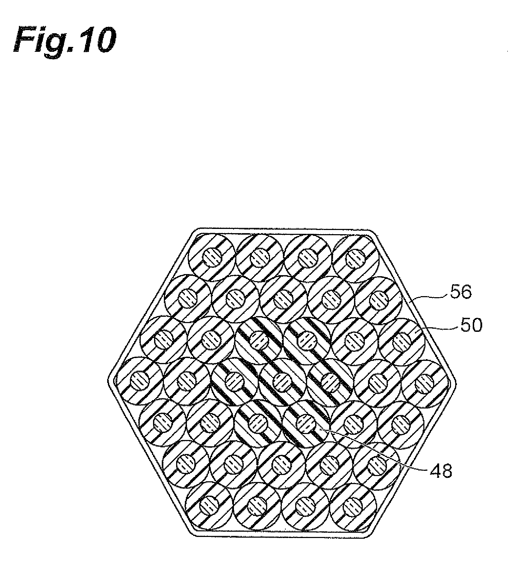

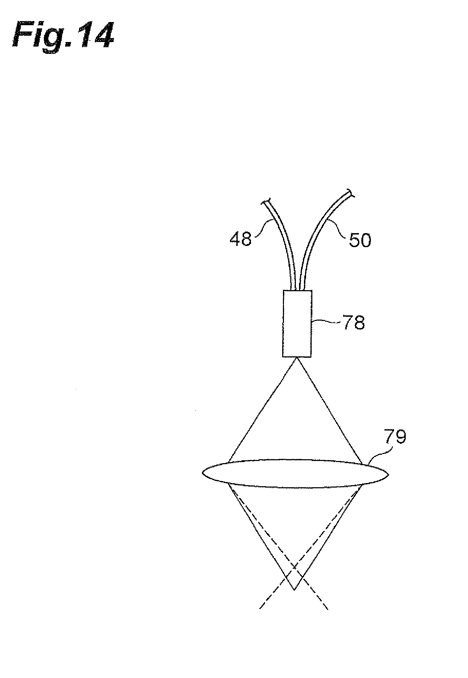

In addition to the method described above, methods for making the irradiation area of the observation light wider than the irradiation area of the processing light on the object to be processed also include the methods shown in Figs. 10 and 14. In the method shown in Fig. 10, a bundled fibre 56 is formed in a cross-sectional hexagonal shape, seven optical fibres 48 are disposed in the center thereof, and 30 optical fibres 50 are arrayed around the periphery of the optical fibres 48. In a bundled fibre 56 configured like this, since the optical fibres 50 are arranged on the outer side of the optical fibres 48, the irradiation area of the observation light outputted from the optical fibres 50 is wider than the irradiation area of the processing light outputted from the optical fibres 48, making it possible to observe the object to be processed extensively. Therefore, it is easy to confirm the processing status of the object to be processed, making it possible to speed up the laser processing.

In the method shown in Fig. 14, an optical fibre (fourth light-guiding body) 78, which is optically connected to the respective optical fibres 48 and the optical fibres 50, is disposed at the output ends of the optical fibres 48, 50. A condenser lens 79 is installed at the tip of the optical fibre 78. Since the wavelengths of the processing light (fixed wavelength of 408 nm) guided by the optical fibres 48 and the observation light (fixed wavelength of 660 nm) guided by the optical fibres 50 differ from one another, the focal positions on the object to be processed will differ in accordance with the chromatic aberration of the condenser lens 79. Then, in a case where the processing light is shaped to form an image in accordance with the processing light focal position (the solid line portion of Fig. 14), it becomes possible to widen the irradiation range of the observation light (broken line portion of Fig. 14). Accordingly, being able to observe the object to be processed extensively makes it easy to confirm the processing status of the object to be processed, and enables laser processing to be speeded up. The condenser lens 79 may also be installed to enable movement along the axial direction of the optical fibre 78. Accordingly, even a lens having either little or no chromatic aberration may be used to substantially change the focal position and widen the irradiation range of the observation light on the object to be processed. Of course, it is also possible to combine the use of lens chromatic aberration with a movable lens installation location.

### (Fifth Embodiment)

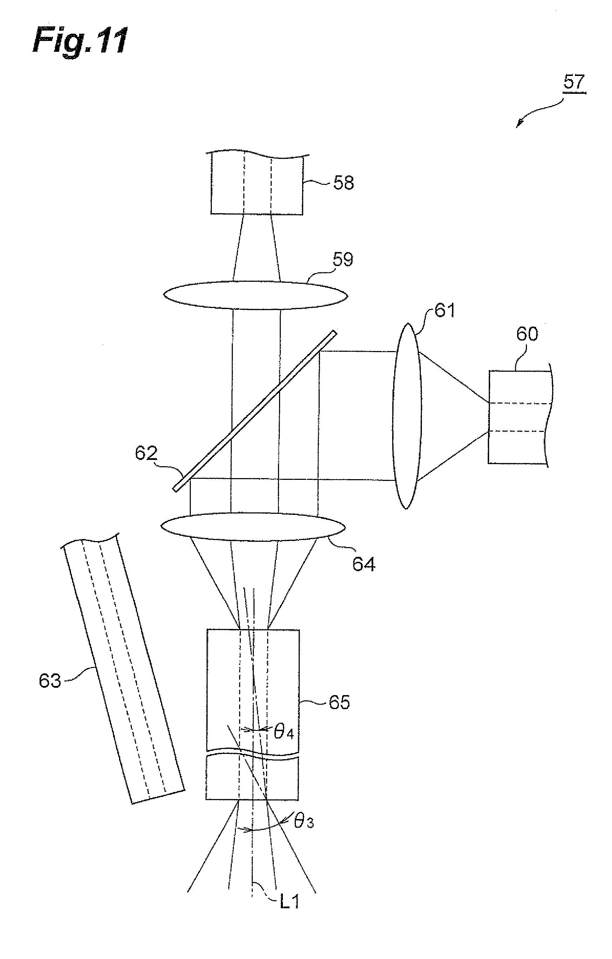

As shown in Fig. 11, a laser processing apparatus 57 comprises an optical fibre (first light-guiding body) 58 for guiding a processing light emitted from a processing light source to an object to be processed; an optical fibre (second light-guiding body) 60 for guiding detection light from the object to be processed to a detector; an optical fibre (third light-guiding body) 63 for guiding an observation light emitted from an observation light source to the object to be processed; and a controller for controlling the light-emitting states of the processing light source and the observation light source on the basis of the results detected by the detector. Since the processing light source, the observation light source and the controller related to this embodiment are the same as the processing light source 35, the observation light source 37 and the detector 4 in the variation shown in Fig. 6, and the detector is the same as the detector 21 in the variation shown in Fig. 4, redundant explanations will be omitted.

An optical fibre (fifth light-guiding body) 65, which is optically connected to an optical fibre 58 and an optical fibre 60, is disposed at the output end of the optical fibre 58. An optical fibre 63 for guiding observation light to the object to be processed is installed in the vicinity of the optical fibre 65. The optical fibre 58 and the optical fibre 65 are interconnected via condenser lenses 59, 64 and an optical filter 62, which is arranged between the condenser lenses 59, 64. By contrast, the optical fibre 60 and the optical fibre 65 are interconnected via condenser lenses 61, 64 and the optical filter 62, which is arranged between the condenser lenses 61, 64.

The optical filter 62 transmits the processing light guided by the optical fibre 58, and reflects the detection light guided by the optical fibre 65. Therefore, the processing light outputted from the optical fibre 58 is condensed by the condenser lens 59, and after being transmitted through the optical filter 62 is condensed once again by the condenser lens 64, enters the optical fibre 65 and is outputted to the object to be processed from the optical fibre 65. Conversely, the detection light inputted to the optical fibre 65 is condensed by the condenser lens 64, and after being reflected by the optical filter 62, is condensed once again by the condenser lens 61, enters the optical fibre 60, and is guided to the detector.

As shown in Fig. 11, the maximum angle θ3 with respect to the optical axis L1 of the optical fibre 65 for the detection light inputted to the optical fibre 65 is larger than the spread angle θ4 of the outputted processing light. This makes it possible to make the detection area of the detection light inputted to the optical fibre 65 wider than the irradiation area of the processing light outputted from this optical fibre 65, enabling the extensive detection of the detection light from the object to be processed. Since it is easy to confirm the processing status of the object to be processed as a result, processing is able to be speeded up.

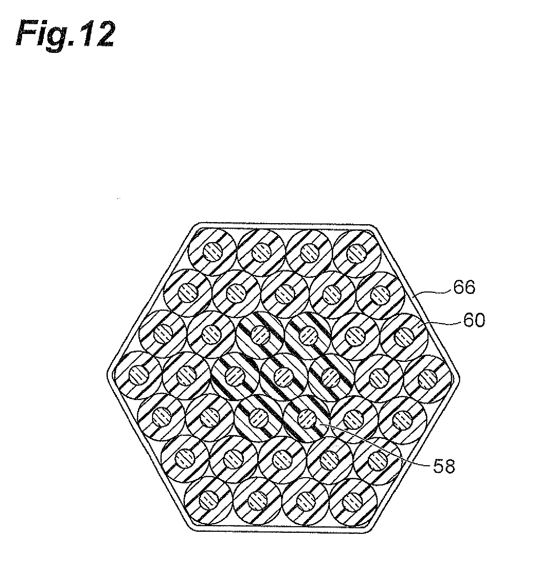

In addition to the method described above, methods for making the detection area of the detection light wider than the irradiation area of the processing light on the object to be processed also include the method shown in Fig. 12. As shown in Fig. 12, a bundled fibre 66 is formed in a cross-sectional hexagonal shape, seven optical fibres 58 are disposed in the center thereof, and 30 optical fibres 60 are arrayed around the periphery of the optical fibres 58. In a bundled fibre 66 configured like this, since the optical fibres 60 are arranged on the outer side of the optical fibres 58, it is possible for the detection area of the detection light inputted to the optical fibres 60 to be wider than the irradiation area of the processing light outputted from the optical fibres 58, enabling the detection light from the object to be processed to be detected extensively. Therefore, it is easy to confirm the processing status of the object to be processed, enabling processing to be speeded up.

### (Sixth Embodiment)

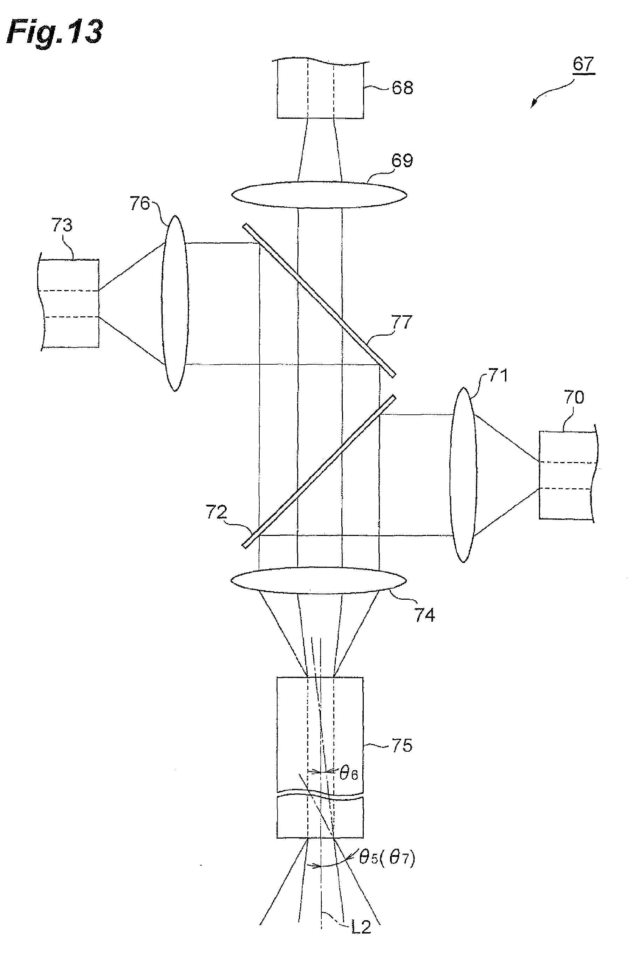

As shown in Fig. 13, a laser processing apparatus 67 comprises an optical fibre (first light-guiding body) 68 for guiding a processing light emitted from a processing light source to an object to be processed; an optical fibre (third light-guiding body) 70 for guiding an observation light emitted by an observation light source to the object to be processed; an optical fibre (second light-guiding body) 73 for guiding a multiple-wavelength detection light generated by the object to be processed to a detector; and a controller for controlling the light-emitting states of the processing light source and the observation light source on the basis of the results detected by the detector. Since the processing light source, the observation light source and the controller related to this embodiment are the same as the processing light source 35, the observation light source 37 and the detector 4 in the variation shown in Fig. 6, and the detector is the same as the detector 21 in the variation shown in Fig. 4, redundant explanations have been omitted.

An optical fibre (fourth light-guiding body) 75, which is optically connected to each of an optical fibre 68, an optical fibre 70 and an optical fibre 73, is disposed at the output ends of the optical fibres 68 and 70. The optical fibre 68 and the optical fibre 75 are interconnected via condenser lenses 69, 74 and two optical filters 72, 77, which are arranged between the condenser lenses 69, 74. The optical fibre 70 and the optical fibre 75 are interconnected via condenser lenses 71, 74 and the optical filter 72, which is arranged between the condenser lenses 71, 74. Further, the optical fibre 73 and the optical fibre 75 are interconnected via condenser lenses 74, 76 and the optical filters 72, 77, which are arranged between the condenser lenses 74, 76.

The optical filter 72 transmits the processing light guided by the optical fibre 68 and the detection light guided by the optical fibre 75, and reflects the observation light guided by the optical fibre 70. The optical filter 77 transmits the processing light guided by the optical fibre 68, and reflects the detection light guided by the optical fibre 75. Therefore, the processing light outputted from the optical fibre 68 is condensed by the condenser lens 69, and after being transmitted through the optical filters 77, 72, is condensed once again by the condenser lens 74, enters the optical fibre 75 and is outputted to the object to be processed from the optical fibre 75. The observation light outputted from the optical fibre 70 is condensed by the condenser lens 71, and after being reflected by the optical filter 72, is condensed once again by the condenser lens 74, enters the optical fibre 75, and is outputted to the object to be processed from the optical fibre 75. The detection light inputted to the optical fibre 75 is condensed by the condenser lens 74, and after being transmitted through the optical filter 72, is reflected by the optical filter 77, is condensed once again by the condenser lens 76, enters the optical fibre 73 and is guided to the detector.

As shown in Fig. 13, the spread angle θ5 of the observation light outputted from the optical fibre 75 is larger than the spread angle θ6 of the processing light outputted from this optical fibre 75. The maximum angle θ7 with respect to the optical axis L2 of the optical fibre 75 for the detection light inputted to the optical fibre 75 is the same as the spread angle θ5 of the observation light. Accordingly, since it is possible to make the irradiation area of the outputted observation light and the detection area of the detection light inputted to the optical fibre 75 wider than the irradiation area of the processing light outputted from the optical fibre 75, it becomes possible to extensively observe the object to be processed, and, in addition, to extensively detect the detection light from the object to be processed. As a result, it is easy to confirm the processing status of the object to be processed, making it possible to speed up the laser processing. The spread angle θ5 of the observation light does not necessarily have to be the same as the maximum angle θ7 with respect to the optical axis L2 of the optical fibre 75 for the detection light, and may differ as long as they are both larger than the spread angle θ6 of the processing light.

The present invention is not limited to the above-described embodiments. For example, laser processing apparatuses utilized in dental treatment and electronic part processing were explained in the above embodiments, but the uses of the laser processing apparatus are not limited to these applications, and the present invention is applicable to other fields as well. The same effect is also obtained using the present method or the present processing apparatus to perform sequential processing while changing the relative laser irradiation position with respect to the irradiation target.

## Claims

1. A laser processing apparatus comprising:
a first light-emitting part for emitting a processing light for processing an object to be processed;
a first light-guiding body for guiding the processing light emitted from said first light-emitting part to said object to be processed;
a second light-guiding body for guiding a multiple-wavelength light generated by said object to be processed;
a detector for detecting the multiple-wavelength light from said object to be processed guided by said second light-guiding body; and
a controller for controlling a light-emitting state of said first light-emitting part based on a result detected by said detector.

2. The laser processing apparatus according to Claim 1, wherein
said detector detects respective optical intensities of light of different wavelengths, and
said controller controls the light-emitting state of said first light-emitting part on the basis of a ratio of the optical intensities of the light of different wavelengths detected by said detector.

3. The laser processing apparatus according to Claim 2, wherein said detector comprises a plurality of detection elements with light-receiving sensitivities that differ in accordance with wavelength.

4. The laser processing apparatus according to Claim 2, wherein
said detector comprises:
an optical filter, which either transmits or reflects light of respectively different center wavelengths; and
a plurality of detection elements for detecting the optical intensities of the light of different center wavelengths, which has either been transmitted through said optical filter, or reflected by said optical filter.

5. The laser processing apparatus according to Claim 2, wherein
said detector comprises:
one detection element; and
optical path changing means for changing an optical path in accordance with the wavelength, and switching the optical path to said detection element.

6. The laser processing apparatus according to Claim 2, wherein said first light-emitting part comprises a plurality of light sources with different center wavelengths.

7. The laser processing apparatus according to Claim 2, further comprising:
a second light-emitting part for emitting an observation light for observing said object to be processed; and
a third light-guiding body for guiding the observation light emitted from said second light-emitting part to said object to be processed.

8. The laser processing apparatus according to Claim 7, wherein said second light-emitting part comprises a plurality of light sources with different center wavelengths.

9. The laser processing apparatus according to Claim 7, wherein at least said first light-guiding body and said third light-guiding body are bundled together and affixed on a side of said object to be processed.

10. A laser processing method that uses the laser processing apparatus according to Claim 7, comprising:
a first step for irradiating at least one of a processing light and an observation light onto an object to be processed;
a second step for detecting a detection light, which is a multiple-wavelength light from said object to be processed, and specifying an irradiation target area in accordance with a characteristic of the detected detection light; and
a third step for irradiating the processing light onto the specified said irradiation target area, and processing said object to be processed.

11. The laser processing method according to Claim 10, wherein an optical intensity of the processing light during irradiation in said third step is higher than the optical intensity of the processing light during irradiation in said first step.

12. A laser processing method that uses the laser processing apparatus according to Claim 7, comprising:
a first step for irradiating light of at least one of a processing light and an observation light onto an object to be processed;
a second step for detecting a detection light, which is a multiple-wavelength light from said object to be processed, and determining either a temperature change or a status change of said object to be processed in accordance with a characteristic of the detected detection light; and
a third step for controlling the processing light irradiated onto said object to be processed on the basis of a determination result.

13. The laser processing method according to Claim 12, wherein
a determination is made in said second step as to the extent of a status change based on a change in the detection light spectrum, and
in a case where the determination is that there is a change in the detection light spectrum, control is exercised on the light-emitting state of said first light-emitting part so as either to reduce the power of the processing light irradiated onto said object to be processed in said third step, or to stop the irradiation of the processing light.

14. The laser processing method according to any one of Claims 10 through 13, wherein the observation light irradiation area is wider than the processing light irradiation area on said object to be processed.

15. The laser processing method according to Claim 14, wherein
a fourth light-guiding body, which is optically connected to both said first light-guiding body and said third light-guiding body, is disposed at the output ends of said first light-guiding body and said third light-guiding body, and
a spread angle of the observation light outputted from said fourth light-guiding body is larger than a spread angle of the processing light outputted from said fourth light-guiding body.

16. The laser processing method according to Claim 14, wherein said first light-guiding body is surrounded by said third light-guiding body.

17. The laser processing method according to any one of Claims 10 through 16, wherein the detection light detection area is wider than the processing light irradiation area on said object to be processed.

18. The laser processing method according to Claim 17, wherein
a fifth light-guiding body, which is optically connected to both said first light-guiding body and said second light-guiding body, is disposed on the output side of said first light-guiding body, and
a maximum angle of the detection light entering said fifth light-guiding body with respect to an optical axis of said fifth light-guiding body is larger than the spread angle of the processing light outputted from said fifth light-guiding body.

19. The laser processing method according to Claim 17, wherein said first light-guiding body is surrounded by said second light-guiding body.
